# EUROPÄISCHE PATENTANMELDUNG

(11) **EP 2 995 467 A1**
(43) Veröffentlichungstag der Anmeldung: **16.03.2016**
(21) Anmeldenummer: 15002612.8
(22) Anmeldetag: 04.09.2015
(51) Int. Cl.: B44B 5/02, B44C 5/04, B32B 15/08, D21H 25/06

(54) **VERFAHREN ZUM HERSTELLEN EINES SCHICHTSTOFFES UND STRUKTUR GEBENDE FOLIE**

(30) Priorität: 09.09.2014 DE 102014013378
(71) Anmelder: Aluminium Féron GmbH & Co. KG, 52355 Düren (DE)
(72) Erfinder: Féron, Bert, 52372 Kreuzau Bergheim (DE)
(74) Vertreter: Hauck Patentanwaltspartnerschaft mbB

(57) **Zusammenfassung**

Es werden ein Verfahren zum Herstellen eines Schichtstoffes und eine Struktur gebende Folie beschrieben. Bei dem Verfahren werden bestrichene oder getränkte Papier- oder Gewebebahnen bei erhöhter Temperatur unter Mitverpressung einer Struktur gebenden Folie zu einem Laminat mit strukturierter Oberfläche verpresst. Als Struktur gebende Folie wird eine mit einer als Strukturgeber dienenden Oberflächenschicht aus einem radikalisch härtenden Lacksystem versehene Metallfolie, Kunststofffolie oder Metall-Kunststoff-Verbundfolie eingesetzt. Mit diesem Verfahren lassen sich Schichtstoffe mit einer qualitativ besonders guten Oberflächenstrukturierung herstellen.

## Beschreibung

Die vorliegende Erfindung betrifft ein Verfahren zur Herstellung eines Schichtstoffes auf Basis von mit Melaminharz, Phenolharz und/oder Melamin-Phenolharz bestrichenen oder getränkten Papier- oder Gewebebahnen, bei dem die bestrichenen oder getränkten Papier- oder Gewebebahnen bei erhöhter Temperatur unter Mitverpressung einer Struktur gebenden Folie zu einem Laminat mit strukturierter Oberfläche verpresst werden.

Schichtstoffe oder Schichtpressstoffe sind Verbundwerkstoffe, beispielsweise Hartpapier, Hartgewebe, Pressholz, die durch schichtweisen Aufbau von mit Kunstharzen bestrichenen oder getränkten Papier- oder Gewebebahnen und durch die Anwendung von Druck und Wärme als Folien, Platten, Formteile etc. hergestellt werden.

Die vorliegende Erfindung betrifft lediglich Schichtstoffe auf der Basis von Melaminharz, Phenolharz und/oder Melamin-Phenolharz. Solche Schichtstoffe finden insbesondere zur Herstellung von dekorativen Oberflächen, insbesondere in der Möbelindustrie, Verwendung.

Die vorliegende Erfindung bezieht sich insbesondere auf diesen Anwendungsbereich.

Die Oberflächenstrukturen aus derartigen Schichtstoffen, wie Holzmaserung, Rasterung, Linien, Oberflächenrauigkeiten, Glanz oder Mattigkeit, werden hierbei durch geätzte, gravierte oder verchromte Stahlplatten hergestellt. Die jetzige Technologie setzt voraus, dass jede zu produzierende Schichtstoffplatte mit einer entsprechend vorbehandelten Stahlplatte produziert wird. Diese wird jedoch bei jedem Gebrauch abgenutzt, so dass somit eine reproduzierbare Oberflächenstruktur insbesondere bei Feinstoberflächen nach einigen tausend Verpressungen nicht mehr gewährleistet ist. Es ist daher einerseits aufwendig, derartige Stahlplatten herzustellen, und andererseits sind die Stahlplatten entsprechenden Abnutzungsprozessen unterworfen, so dass sie periodisch erneuert werden müssen. Darüber hinaus müssen die Stahlplatten nach jedem Gebrauch gründlich gereinigt werden.

Es ist ferner bekannt, unlackierte papierkaschierte Aluminiumfolien und Polypropylenfolien als Trennschichtfolien unter glatten Stahlplatten einzusetzen und diese Folien als Strukturgeber zu verwenden. Bei papierkaschierten Aluminiumfolien bestimmen dabei das Kaschierpapier bzw. die Papierfasern beim Verpressen die Oberflächenstruktur, während die Aluminiumschicht für den Glanz- oder Mattgrad sorgt. Aus derartigen Trennschichtfolien lassen sich Schichtstoffe mit Oberflächenstrukturen herstellen, die einen guten optischen Eindruck vermitteln, jedoch in Bezug auf Homogenität und Feinheit noch verbesserungswürdig sind.

Der vorliegenden Erfindung liegt die Aufgabe zugrunde, ein Verfahren der eingangs geschilderten Art zur Verfügung zu stellen, mit dem sich qualitativ besonders hochwertige Schichtstoffe herstellen lassen.

Diese Aufgabe wird erfindungsgemäß bei einem Verfahren der angegebenen Art dadurch gelöst, dass als Struktur gebende Folie eine mit einer als Strukturgeber dienenden Oberflächenschicht aus einem radikalisch härtenden Lacksystem versehene Metallfolie, Kunststofffolie oder Metall-Kunststoff-Verbundfolie eingesetzt wird.

Mit dem erfindungsgemäßen Verfahren lassen sich feinste differenzierte Oberflächen herstellen, die bisher am Markt nicht verfügbar sind. So können beispielsweise in einer Glanzoberfläche feinste mattierte Strukturen, Bilder oder Schattierungen geschaffen werden und umgekehrt. Die hergestellten Schichtstoffe zeichnen sich daher durch eine besonders hohe Qualität, insbesondere in Bezug auf Feinheit und Homogenität der hergestellten Oberflächenstrukturen, aus.

Die im erfindungsgemäßen Verfahren als Werkzeug eingesetzte Struktur gebende Folie setzt sich aus einem Substrat und einer Oberflächenschicht zusammen. Als Substrat können Kunststofffolien, Metallfolien oder Verbundfolien, die mindestens eine der vorgenannten Folien beinhalten, verwendet werden. Beispiele für Metallfolien sind Aluminiumfolien, wobei Metallfolien vorzugsweise in einer Stärke von 6 - 150 µm eingesetzt werden und entsprechende Aluminiumfolien vorzugsweise eine Stärke von 20 - 50 µm besitzen. Wenn Kunststofffolien verwendet werden, wie beispielsweise aus PET, finden vorzugsweise Stärken von 8 - 300 µm, insbesondere von 23 - 50 µm, Verwendung.

Das vorstehend beschriebene Substrat weist eine als Strukturgeber dienende Oberflächenschicht aus einem radikalisch härtenden Lacksystem auf. Solche radikalisch härtende (polymerisierbare oder vernetzbare) Lacksysteme sind dem Fachmann bekannt. Beispielsweise können hierbei geeignete Systeme auf der Basis von Polyurethanharzen, Epoxidharzen, Melaminharzen etc. Verwendung finden.

Solche radikalisch härtenden Lacksysteme werden beispielsweise durch UV-Bestrahlung, ESH, LED-Bestrahlung etc. gehärtet.

Es hat sich gezeigt, dass sich ein derartiges auf das Substrat aufgebrachte Lacksystem vor und/oder während der Härtung über geeignete Werkzeuge mit der gewünschten Oberflächenstruktur versehen lässt. Dabei wird nach dem Aushärten ein ausreichend stabiles System erhalten, das einen Einbau der Struktur gebenden Folie in den herzustellenden Schichtstoff sowie das Mitverpressen der Folie ermöglicht, wobei die entsprechende Oberflächenstruktur auf den Schichtstoff transferiert wird, ohne dass die Struktur durch den Pressvorgang (Einwirkung von Wärme und Druck) beschädigt wird. Es wurde festgestellt, dass hierfür lediglich radikalisch härtende Lacksysteme geeignet sind, die sowohl die Herstellung der gewünschten Oberflächenstruktur als auch die Transferierung dieser Struktur auf den Schichtstoff ermöglichen.

Vorzugsweise wird die Struktur gebende Folie hergestellt, indem die Metallfolie, Kunststofffolie oder Metall-Kunststoff-Verbundfolie mit dem Lacksystem beschichtet und die beschichtete Folie durch entsprechende Werkzeuge auf der Oberflächenschicht strukturiert wird, wobei oder wonach die radikalische Härtung durchgeführt wird. Dabei wird mit entsprechenden Strukturierungen beispielsweise eine Gravierung, Musterung, Mattierung, Glanzverleihung, differenzierte Oberflächengestaltung oder sonstige Oberflächenstrukturierung der Oberflächenschicht durchgeführt. Das erfindungsgemäße Verfahren ermöglicht es dabei insbesondere auch, die Oberflächenschicht mit bildlichen Gestaltungen zu versehen. Beispielsweise können dabei Bilder oder Schattierungen in der Form von mattierten Strukturen auf einer Glanzoberfläche vorgesehen werden oder umgekehrt.

Wie erwähnt, lassen sich diese hochfeinen Struktur gebenden Oberflächen mit unterschiedlichen Glanz/Mattstrukturen bei dem erfindungsgemäßen Verfahren auf unproblematische Weise auf die Oberfläche des herzustellenden Schichtstoffes transferieren. Die Struktur gebende Folie wird hierfür als Werkzeug eingesetzt, und zwar in der Regel nur für einen Verpressungsvorgang. Die Folie ist daher in der Regel nur einmal verwendbar und wird danach verworfen. Da sich jedoch mit den verwendeten Werkzeugen beliebig viele Folienabschnitte mit entsprechender Oberflächengüte herstellen lassen, wird eine einhundertprozentig gleiche Struktur gebende Fläche garantiert. Die Reproduzierbarkeit ist daher gegeben.

Bei dem erfindungsgemäßen Verfahren wird die Oberflächenschicht vorzugsweise aus einem Hartcoat-Lack hergestellt. Ein derartiges Lacksystem sorgt für die entsprechende Härte der Oberflächenschicht, so dass diese im Verpressungsvorgang zur Schichtstoffherstellung nicht beeinträchtigt wird. Weiter bevorzugt wird die Oberflächenschicht aus einem mit Nanopartikeln versehenen Lacksystem (Nanolacksystem) hergestellt. Bei geeigneten Nanopartikeln kann es sich hierbei um solche, wie Silicium oder entsprechende Silikate, handeln.

Bei weiteren Ausführungsformen des erfindungsgemäßen Verfahrens wird die Oberflächenschicht der Struktur gebenden Folie mit einer zusätzlichen, als Trennschicht wirkenden Schicht versehen und/oder wird die Oberflächenschicht der Struktur gebenden Folie mit einer zusätzlichen, die Oberflächenspannung des fertigen Schichtstoffes reduzierenden Schicht versehen. Insbesondere kommt eine Verfahrensvariante zum Einsatz, bei der eine Trennschicht vorgesehen wird, bei der gleichzeitig sich die Oberflächenspannung reduziert. Auf diese Weise lässt sich ein Schichtstoff mit besonders guten Anti-Fingerprint-Eigenschaften herstellen.

Die vorliegende Erfindung bezieht sich ferner auf eine Struktur gebende Folie zur Herstellung eines Schichtstoffes auf Basis von mit Melaminharz, Phenolharz und/oder Melamin-Phenolharz bestrichenen oder getränkten Papier- oder Gewebebahnen, bei der die bestrichenen oder getränkten Papier- oder Gewebebahnen bei erhöhter Temperatur unter Mitverpressung der Struktur gebenden Folie zu einem Laminat mit strukturierter Oberfläche verpresst werden.

Diese Struktur gebende Folie ist erfindungsgemäß dadurch gekennzeichnet, dass die Folie eine mit einer als Strukturgeber dienenden Oberflächenschicht aus einem radikalisch härtenden Lacksystem versehene Metallfolie, Kunststofffolie oder Metall-Kunststoff-Verbundfolie ist.

Eine solche Folie wird vorzugsweise in dem vorstehend beschriebenen Verfahren eingesetzt. Die Folie wird beim Verpressungsvorgang des Schichtstoffes insbesondere unter eine obere glatte Stahlplatte eingeschoben und zusammen mit den Papier- oder Gewebebahnen des Schichtstoffes verpresst.

Die Oberflächenschicht der Folie weist vorzugsweise eine Gravierung, Mattierung, differenzierte Oberflächengestaltung oder sonstige Oberflächenstrukturierung auf. Diese kann aber auch flächenmäßig durchgehend feinmattiert oder durchgehend hochglänzend sein. Diese Oberflächenstrukturierung wird beim Verpressungsvorgang auf die Oberfläche des Schichtstoffes übertragen. Bei einer speziellen Ausführungsform ist die Oberflächenschicht mit mindestens einer bildlichen Gestaltung versehen.

Die Oberflächenschicht der Folie besteht vorzugsweise aus einem Hartcoat-Lack, und zwar insbesondere aus einem mit Nanopartikeln versehenen Lacksystem, dieses ausschließlich radikal härtend.

Bei noch einer weiteren Ausführungsform ist die Oberflächenschicht der Struktur gebenden Folie mit einer zusätzlichen als Trennschicht wirkenden Schicht versehen. Diese Trennschicht verbessert die Abtrennung der Struktur gebenden Folie nach dem Verpressungsvorgang vom hergestellten Schichtstoff. Die Trennschicht ist so ausgebildet, dass sie die Transferierung der Oberflächenstruktur von der Struktur gebenden Folie auf den Schichtstoff nicht behindert.

Bei noch einer weiteren Ausführungsform ist die Oberflächenschicht der Struktur gebenden Folie mit einer zusätzlichen, die Oberflächenspannung des fertigen Schichtstoffes reduzierenden Schicht versehen. Diese Schicht kann ebenfalls als Trennschicht ausgebildet sein oder zusätzlich zu der vorstehend beschriebenen Trennschicht angeordnet sein. Eine solche Schicht bewirkt eine beträchtliche Reduzierung der Oberflächenenergie des Schichtstoffes, so dass insbesondere ein guter Schutz gegen Fingerprints erreicht wird. Die entsprechende Schicht besitzt vorzugsweise einen Stoff, der mit dem Harz des Schichtstoffes eine Vernetzungsreaktion eingeht, so dass sich eine hervorragende Haftung der zusätzlichen Oberflächenschicht auf dem Schichtstoff ergibt und diese eine Langzeitwirkung besitzt.

Eine Methode, mit der entsprechende Anti-Fingerprint-eigenschaften verliehen werden, ist in der älteren deutschen Patentanmeldung 10 2014 002 483.0 beschrieben.

## Patentansprüche

1. Verfahren zum Herstellen eines Schichtstoffes auf Basis von mit Melaminharz, Phenolharz und/oder Melamin-Phenolharz bestrichenen oder getränkten Paper- oder Gewebebahnen, bei dem die bestrichenen oder getränkten Papier- oder Gewebebahnen bei erhöhter Temperatur unter Mitverpressung einer Struktur gebenden Folie zu einem Laminat mit strukturierter Oberfläche verpresst werden, **dadurch gekennzeichnet, dass** als Struktur gebende Folie eine mit einer als Strukturgeber dienenden Oberflächenschicht aus einem radikalisch härtenden Lacksystem versehene Metallfolie, Kunststofffolie oder Metall-Kunststoff-Verbundfolie eingesetzt wird.

2. Verfahren nach Anspruch 1, **dadurch gekennzeichnet, dass** die Struktur gebende Folie hergestellt wird, indem die Metallfolie, Kunststofffolie oder Metall-Kunststoff-Verbundfolie mit dem Lacksystem beschichtet und die beschichtete Folie durch entsprechende Werkzeuge auf der Oberflächenschicht strukturiert wird, wobei gleichzeitig damit und/oder danach die radikalische Härtung durchgeführt wird.

3. Verfahren nach Anspruch 2, **dadurch gekennzeichnet, dass** mit einer entsprechenden Strukturierung eine Gravierung, Musterung, Mattierung, Glanzverleihung, differenzierte Oberflächengestaltung oder sonstige Oberflächenstrukturierung der Oberflächenschicht durchgeführt wird.

4. Verfahren nach Anspruch 3, **dadurch gekennzeichnet, dass** die Oberflächenschicht mit mindestens einer bildlichen Gestaltung versehen wird.

5. Verfahren nach einem der vorangehenden Ansprüche, **dadurch gekennzeichnet, dass** die Oberflächenschicht aus einem Hartcoat-Lack hergestellt wird.

6. Verfahren nach einem der vorangehenden Ansprüche, **dadurch gekennzeichnet, dass** die Oberflächenschicht aus einem mit Nanopartikeln versehenen Lacksystem hergestellt wird.

7. Verfahren nach einem der vorangehenden Ansprüche, **dadurch gekennzeichnet, dass** die Oberflächenschicht der Struktur gebenden Folie mit einer zusätzlichen, als Trennschicht wirkenden Schicht versehen wird.

8. Verfahren nach einem der vorangehenden Ansprüche, **dadurch gekennzeichnet, dass** die Oberflächenschicht der Struktur gebenden Folie mit einer zusätzlichen, die Oberflächenspannung des fertigen Schichtstoffes reduzierenden Schicht versehen wird.

9. Struktur gebende Folie zur Herstellung eines Schichtstoffes auf Basis von mit Melaminharz, Phenolharz und/oder Melamin-Phenolharz bestrichenen oder getränkten Papier- oder Gewebebahnen, bei der die bestrichenen oder getränkten Papier- oder Gewebebahnen bei erhöhter Temperatur und unter Mitverpressung der Struktur gebenden Folie zu einem Laminat mit strukturierter Oberfläche verpresst werden, **dadurch gekennzeichnet, dass** die Folie eine mit einer als Strukturgeber dienenden Oberflächenschicht aus einem radikalisch härtenden Lacksystem versehene Metallfolie, Kunststofffolie oder Metall-Kunststoff-Verbundfolie ist.

10. Folie nach Anspruch 9, **dadurch gekennzeichnet, dass** die Oberflächenschicht eine Gravierung, Musterung, differenzierte Oberflächengestaltung oder sonstige Oberflächenstrukturierung aufweist.

11. Folie nach Anspruch 10, **dadurch gekennzeichnet, dass** die Oberflächenschicht mit mindestens einer bildlichen Gestaltung versehen ist.

12. Folie nach einem der Ansprüche 9 bis 11, **dadurch gekennzeichnet, dass** die Oberflächenschicht aus einem Hartcoat-Lack besteht.

13. Folie nach einem der Ansprüche 9 bis 12, **dadurch gekennzeichnet, dass** die Oberflächenschicht aus einem mit Nanopartikeln versehenen Lacksystem besteht.

14. Folie nach einem der Ansprüche 9 bis 13, **dadurch gekennzeichnet, dass** die Oberflächenschicht mit einer zusätzlichen, als Trennschicht wirkenden Schicht versehen ist.

15. Folie nach einem der Ansprüche 9 bis 14, **dadurch gekennzeichnet, dass** die Oberflächenschicht mit einer zusätzlichen, die Oberflächenspannung des fertigen Schichtstoffes reduzierenden Schicht versehen ist.
